# EUROPEAN PATENT SPECIFICATION

(11) **EP 2 724 106 B1**
(45) Date of publication and mention of the grant of the patent: **07.08.2019**
(21) Application number: 12737914.7
(22) Date of filing: 18.06.2012
(51) Int. Cl.: F28D 7/16, F28F 1/02, F28F 1/12, F24H 1/34, F24H 1/40, F24H 8/00

(54) **HEAT EXCHANGER TUBE SET**
SYSTEM VON WÄRMETAUSCHERRÖHREN
ENSEMBLE DE TUBES D'ÉCHANGEUR DE CHALEUR

(30) Priority: 24.06.2011 PL 39542411
(43) Date of publication of application: 30.04.2014
(73) Proprietor: AIC Spólka Akcyjna, 81-577 Gdynia (PL)
(72) Inventor: KUZMA, Mariusz, PL-83-000 Pruszcz Gdanski (PL)
(74) Representative: Pomianek, Grazyna
(86) International application number: PCT/PL2012/000045
(87) International publication number: WO 2012/177154

(56) References cited:
- EP-A1- 0 459 785
- EP-A1- 0 545 954
- EP-A1- 1 243 866
- EP-A1- 1 688 682
- EP-A2- 0 618 410
- EP-A2- 0 985 895
- WO-A1-95/17637
- WO-A1-2006/097959
- WO-A1-2008/078211
- WO-A2-2008/056238
- WO-A2-2011/048574
- BE-A- 457 244
- FR-A1- 2 485 173
- GB-A- 1 114 746
- JP-A- S5 932 791
- US-A- 3 789 805
- US-A- 5 915 468
- US-A1- 2008 061 160
- US-A1- 2008 127 910

## Description

The invention concerns a heat exchanger tube set, designed for a fuel heat exchanger.

Known are heat exchangers composed of tubes fixed to sieve bottoms, around which hot fumes flow.

Also known are heat exchangers composed of tubes fixed to sieve bottoms and fins arranged in between the tubes to increase the heat exchange surface area. Known from patent application WO 2011/055515 A1 is an element constituting heat exchange fins, fitted in between the tubes.

Also known from patent application EP 0 860 674 A1 is a heat exchanger composed of a plurality of parallel tubes positioned at a distance from one another, and a plurality of ring fins around the tubes, touching on the tubes.

From patent application EP 0 618 410 A2 known is heat exchanger for a condensing boiler, in which the pipes from the return to the flow form only one flow path, i.e. are not divided and are arranged either horizontally or upwardly oriented, so that good deaeration can take place, and wherein the actual pipes of the exchanger are arranged close to one another and the row of pipes lying opposite the burner is inclined by 60° to the horizontal, while the burner flame is oriented approximately horizontally.

Document GB 1 114 746 A discloses improvements in or relating to hot water producing appliances which using gaseous fuels, and has particular, but not exclusive application in appliances used for feeding central heating systems which may be combined with domestic hot water supply systems, water heaters and bath heaters.

Document EP 0 545 954 A1 discolses a gas-fired water heater with a heat exchanger, designed as a lamina block with water pipes routed through it which terminate in water chambers which are each formed between a base part fixed on the water pipes.

Document EP 0 985 895 A2 discloses a heat exchanger unit to be used in a gas-fired water heater in which heater a heat exchanger unit contains tubes with fins. The heat exchanger unit contains flat oval tubes having a fin at least on one flat part. The flat oval tubes as well as the fins are made of copper, copper-based alloy, aluminium or aluminium-based alloy.

Document FR 2 485 173 A1 discloses a heat generator provided with gas burners, working as a condensing boiler.

Document EP 459 785 A discloses a hot water boiler intended to form one module of a multi-module boiler assembly which is arranged so that some of its water tubes operate in a condensing mode during normal operation. The condensing tubes are arranged in a single row beneath a ring of the non-condensing tubes. The combustion gases of a gas burner located centrally within the ring of non-condensing tubes are directed by internal shroud, baffle and housing to pass the condensing tubes in cross-flow mode and as two opposed gas flows.

The purpose of this invention is to improve heat exchange parameters and increase the power of the heat exchanger while simultaneously economising on the material.

The purpose was achieved by designing a tube set consisting of heat exchange zones.

The heat exchanger tube set according to the invention, designed for a fuel heat exchanger, containing two heat exchange zones created of heat exchange elements in the form of tubes fixed to sieve bottoms, and finned elements filling in the spaces in between the tubes, and immediately after zone one is formed exclusively of smooth tubes, preferably circular in cross section, there is zone two formed of flat or oval tubes with finned elements made of a band with profiled plates fitted in between the tubes, and in the zone one is formed a combustion chamber, wherein the combustion chamber and the tubes in said both zones are positioned horizontally, and said zone two is positioned under said zone one.

The purpose of zone one is to cool down the fumes initially so as to avoid over-heating and damaging the finned elements of zone two with high temperature, where the purpose of the finned elements is to increase the heat exchange surface area and agitate the agent flowing through them.

In embodiment of the invention, two or more such bands may run the full height of zone two, in between the respective neighbouring tubes, and the plates may interchangeably inclined in the opposite directions.

The structure of the set composed of two zones according to the invention enables achieving high power of the heat exchanger while simultaneously economising on the material and increasing the exchanger's durability.

The positioning of zone two behind zone one which separates zone two from the combustion chamber causes that the cooled fumes in zone one do not over-heat or destroy the plates of the finned elements of zone two, where the purpose of the latter is to increase the heat exchange surface area and agitate the agent flowing through them. Moreover, cooled in zone one, the fumes do not cause overheating of the working agent or bring it to the boiling point.

The invention is illustrated on the exemplary drawings, where:
Fig. 1 shows the heat exchanger tube set according to the invention in the axonometric projection,

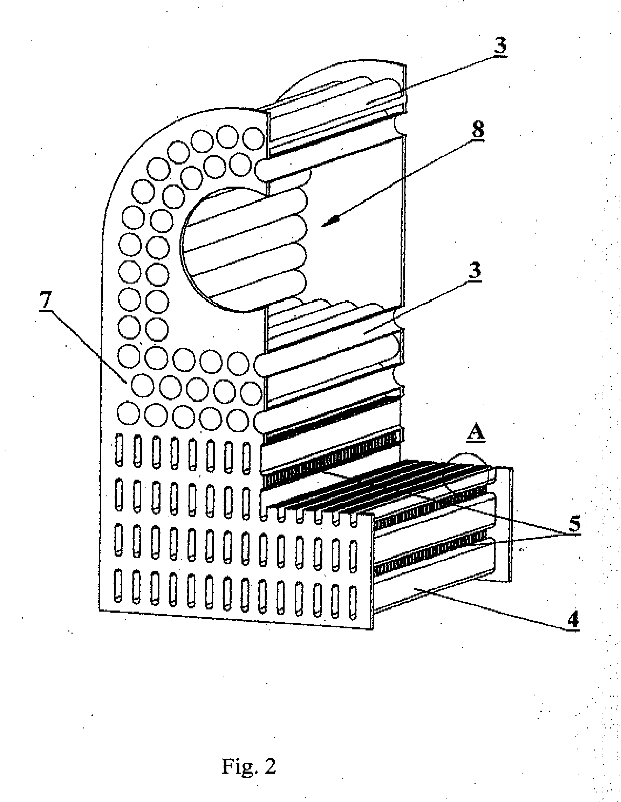

Fig. 2 shows the inside of the set,
Fig. 3 shows a fragment of zone two,
Figures 4 to 6 show the set with different zone configurations in an orthographic projection,
Fig. 7 shows the zones of the set,
Fig. 8 shows one finned element along the full height of zone two with plates profiled at the right angle to the tubes of zone two,
Fig. 9 shows two finned elements with the plates profiled at the right angle to the tubes of zone two,
Fig. 10 shows four finned elements with plates profiled at the right angle to the tubes of zone two,
Fig. 11 shows one finned element along the full height of zone two with plates profiled at the angle of ≠ 90° to the tubes of zone two,
Fig. 12 shows two finned elements with plates profiled at the angle of ≠ 90° to the tube axis, inclined in different directions,
Fig. 13 shows two finned elements with plates profiled at the angle of ≠ 90° to the tube axis, all inclined in the same direction,
Fig. 14 shows tour finned elements with plates profiled at the angle of ≠ 90° to the tube axis, interchangeably inclined in the opposite directions,
Fig. 15 shows four finned elements with plates profiled at the angle of ≠ 90° to the tube axis, all inclined in the same direction.

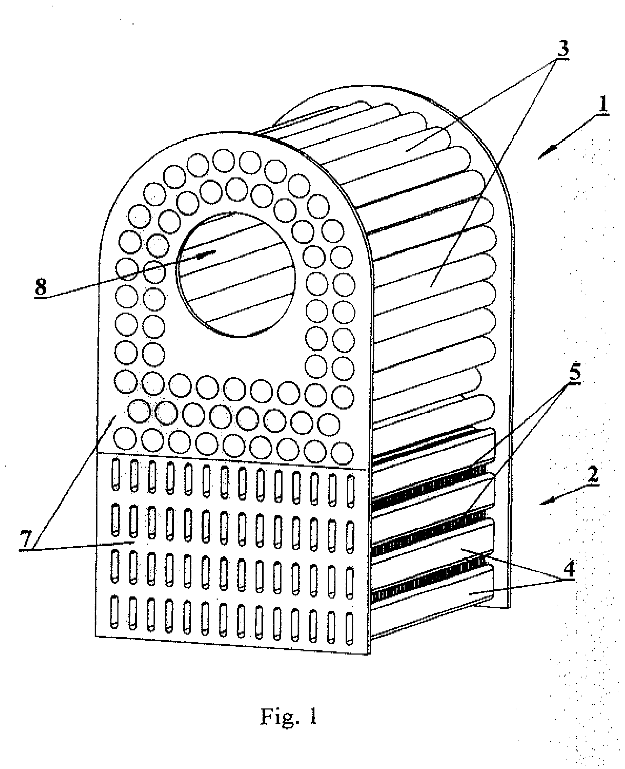

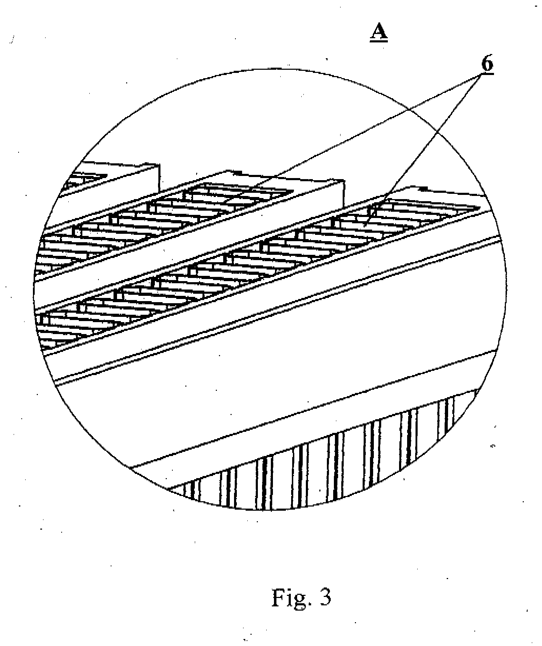

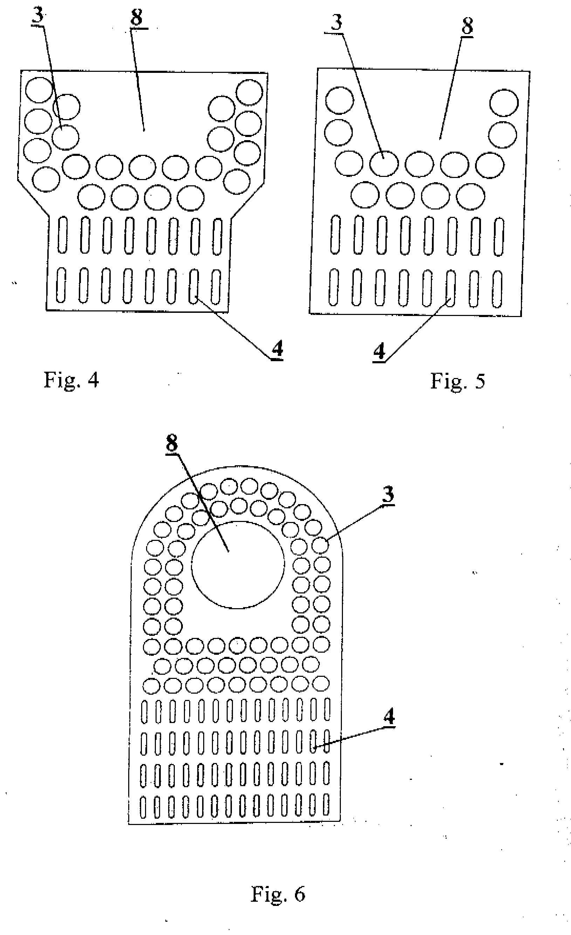

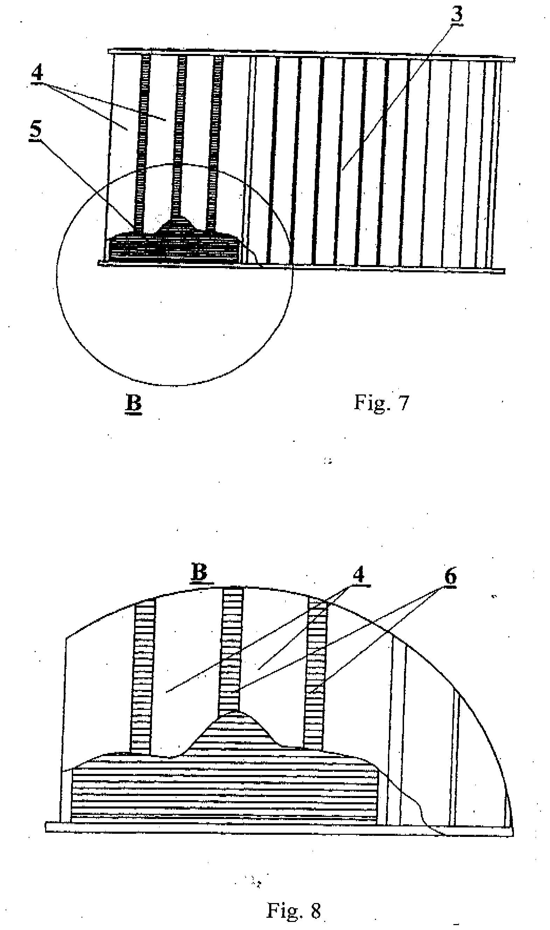

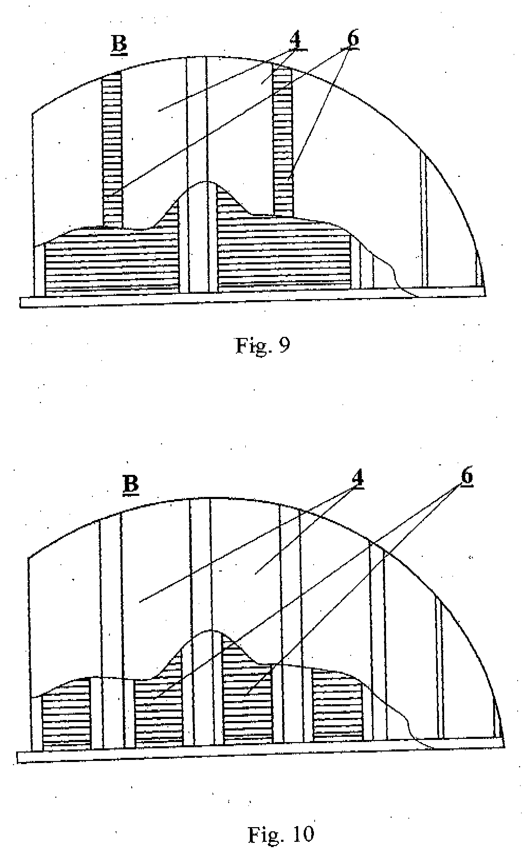

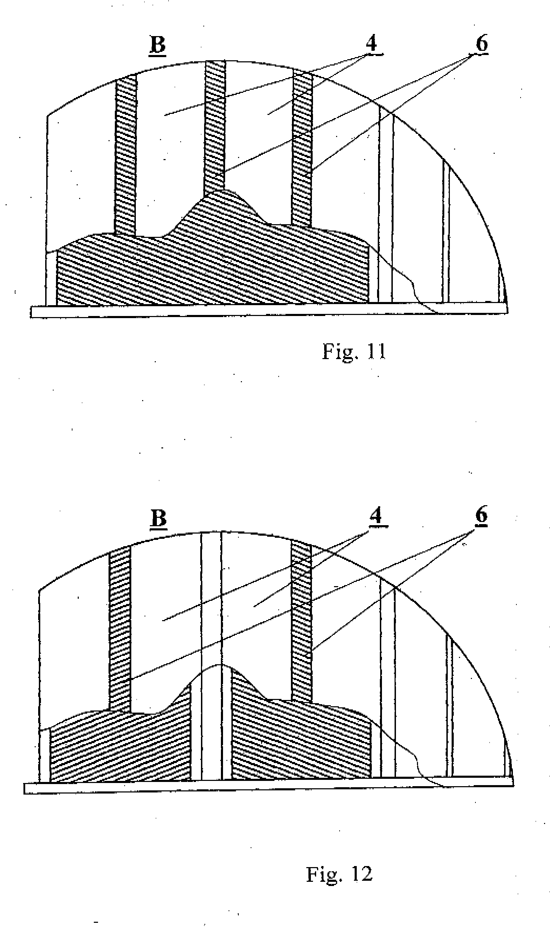

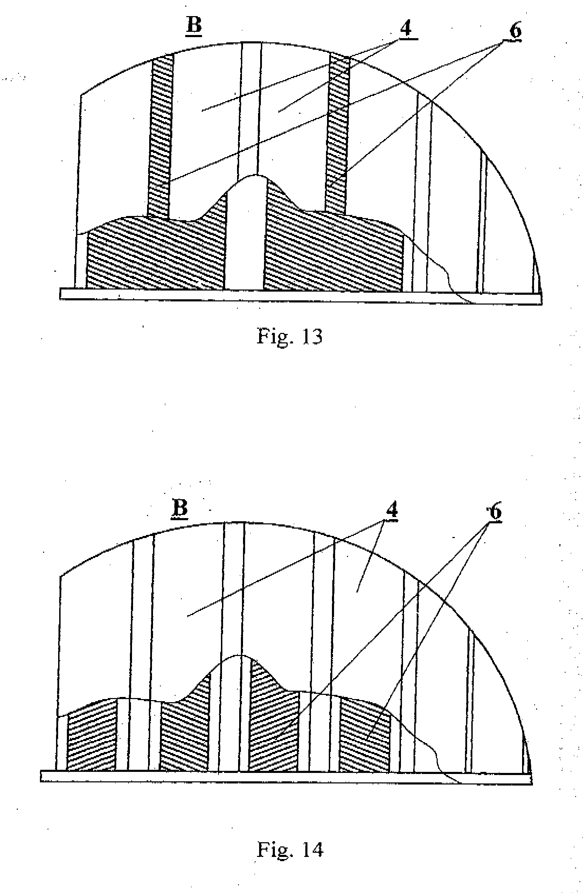

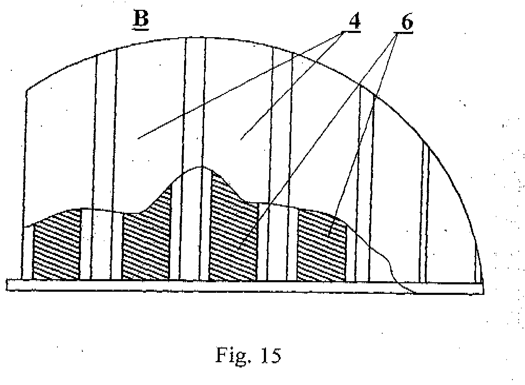

In accordance with the examples of the invention, the heat exchanger tube set has two heat exchange zones. Zone one 1 is formed exclusively of smooth tubes 3 circular in cross-section, positioned parallel to one another. The combustion chamber 8 is positioned inside zone one 1, which is shown on Fig. 1, Fig. 6. Zone one 1 is immediately followed by zone two 2 formed of tubes 4 flat or oval in cross-section, again running parallel to one another, in between which finned elements 5 are fitted formed of a band with profiled plates 6, which is presented on Fig. 3. There is one finned element running along the full height of zone two in between the respective neighbouring tubes, as shown on Fig. 8 and Fig. 11. In another embodiment there are two finned elements 5 fitted, which is presented on Fig. 9, Fig. 12, and Fig. 13, and in yet another embodiment there is only one finned element 5 fitted in between two tubes 4, which is shown on Fig. 10, Fig. 14, and Fig. 15. In one embodiment of the invention the plates 6 of the finned element 5 are profiled perpendicular to the tubes 4, which is presented on Fig. 8 to Fig. 10, and in another embodiment at the angle of ≠ 90°, which is shown on Figures 11 - 15. In the case of two or several finned elements fitted at the height of zone two 2, the plates 6 are all inclined in the same direction,
which is shown on Fig. 13 and Fig. 15, or interchangeably inclined in the opposite directions, which is presented on Fig. 12 and Fig. 14. The tubes 3 of zone one and the tubes 4 of zone two arc fixed to their respective common sieve bottoms 7, which is shown on Figures 4 to 6, or - in another embodiment they are fixed to separate sieve bottoms 7. Exemplary shapes of the set are shown on Figures 4 to 6.

The fumes formed in the combustion chamber 8 first flow around the tubes 3 of zone one 1, where they are cooled, and then penetrate into zone two 2, where they flow around the tubes 4 and finned elements 5, get agitated, and give up their heat. The agent circulating in the tubes 3 of zone one 1 and in the tubes 4 of zone two 2 takes over the heat.

## Claims

1. A heat exchanger tube set, designed for a fuel heat exchanger, comprising two heat exchange zones, the zone one (1) and the zone two (2), created of heat exchange elements in the form of tubes fixed to sieve bottoms and finned elements filling in the spaces in between the tubes, wherein immediately after the zone one (1) formed exclusively of smooth tubes (3), preferably circular in cross section, there is the zone two (2) formed of flat or oval tubes (4) with finned elements (5) made of a band with profiled plates (6) fitted in between the tubes, wherein in the zone one (1) is formed a combustion chamber, and wherein the combustion chamber and the tubes in said both zones (1, 2) are positioned horizontally, and said zone two (2) is positioned under said zone one (1).

2. The set according to Claim 1, **characterised in that** the plates (6) of the finned element (5) are profiled at an angle different of 90° to the tubes (4) of zone two (2), and they are interchangeably inclined in the opposite directions.

## Patentansprüche

1. System von Wärmetauscherröhren, insbesondere für einen beheizten Austauscher, bestehend aus zwei Austauschzonen, einer ersten Zone (I) sowie einer zweiten Zone (2), gebildet aus in Siebböden befestigten Rohren, sowie aus gerippten Bestandteilen, die den Raum zwischen den Rohren füllen, wobei sich direkt der ersten, ausschließlich aus glatten Rohren (3) geformten, insbesondere mit einem kreisförmigen Querschnitt, Zone (1) eine zweite Zone (2) aus flachen bzw. ovalen Rohren (4) mit Rippenbestandteilen (5) aus einem Band mit geformten, zwischen den Rohren angebrachten Blechlamellen anschließt, wobei in der ersten Zone (1) eine Brennkammer geformt ist, wobei die Brennkammer und Rohre der beiden Zonen (1, 2) waagerecht geordnet sind sowie sich die zweite Zone (2) unterhalb der ersten Zone (1) befindet.

2. System nach dem Anspruch 1, **dadurch gekennzeichnet, dass** Blechlamellen (6) des gerippten Bestandteils (5) in einem Winkel anders als 90° gegenüber Rohren (4) der Zone (2) sowie in entgegengesetzte Richtungen im Wechsel geneigt geformt sind.

## Revendications

1. Ensemble de tubes d'échangeur de chaleur, en particulier pour un échangeur de chaleur à foyer, constitué de deux zones d'échange, la première zone (1) et la seconde zone (2), constituées de tubes montés sur des fonds tamisés, et d'éléments nervurés remplissant l'espace entre tubes, immédiatement après ladite première zone (1) formée exclusivement de tubes lisses (3), de préférence de section circulaire, se trouve la deuxième zone (2) formée de tubes plats ou ovales (4) avec des éléments nervurés (5) faits en bande avec lamelles conformées (6) situées entre ces tubes, la première zone (1) formant la chambre de combustion, la chambre de combustion et les tubes des deux zones (1, 2) étant disposés horizontalement, et ladite seconde zone (2) est située sous la zone première (1).

2. Ensemble selon la revendication 1, **caractérisé en ce que** les lamelles (6) de l'élément nervuré (5) sont conformées selon un angle différent de 90° par rapport aux tubes (4) de la deuxième zone (2), et sont inclinées en alternance dans des directions opposées.
